# EUROPEAN PATENT SPECIFICATION

(11) **EP 2 588 393 B1**
(45) Date of publication and mention of the grant of the patent: **23.07.2014**
(21) Application number: 11720864.5
(22) Date of filing: 21.03.2011
(51) Int. Cl.: B65G 17/08, B65G 17/40, B65G 21/10, B65G 21/22, B65G 23/06

(54) **A CONVEYOR WITH ARTICULATED LINKS**
FÖRDERBAND MIT GELENKVERBINDUNGEN
TRANSPORTEUR COMPRENANT DES LIAISONS ARTICULÉES

(30) Priority: 29.06.2010 IT BO20100415
(43) Date of publication of application: 08.05.2013
(73) Proprietor: Pulsar S.r.l., 40013 Castel Maggiore (Bologna) (IT)
(72) Inventor: FRANZAROLI, Massimo, I-40113 Castel Maggiore (Bologna) (IT)
(74) Representative: Fanzini, Valeriano
(86) International application number: PCT/IB2011/051171
(87) International publication number: WO 2012/001538

(56) References cited:
- EP-A2- 0 976 668
- WO-A1-99/52798
- GB-A- 2 309 062
- US-A- 5 697 492
- US-A1- 2008 017 482
- US-B1- 6 364 094

## Description

### Technical Field

This invention relates to a conveyor of the type with articulated links according to the preamble of claim 1.

### Background Art

Conveyors are known which comprise means for supporting and guiding an endless conveyor belt having an upper, product conveying and feeding stretch and a lower, belt return stretch, and where the conveyor belt comprises a plurality of interconnected articulated links.

In the prior art conveyors of this type, each link has a portion for supporting the product and a portion by which it is articulated to the other links of the conveyor.

More specifically, conveyors of the type with articulated links are known which comprise links that are suitable for making curves on the horizontal or supporting surface, the links being in the form of transversal plates with a front edge and a rear edge with substantially linear extension.

Also known in the prior art are conveyors which can make curves on the horizontal or supporting surface and which comprise a respective upper portion or plate that supports the product. At the front and rear transversal edges of it, each upper portion or plate comprises longitudinal protrusions, being outer and inner protrusions, respectively, which are adapted to slot into matching recesses on the links adjacent to it, that is to say, the link preceding and the link following, and which laterally delimit matching recesses, being transversally outer and inner recesses, respectively, for receiving matching protrusions on the adjacent links.

In these prior art links, the inner end faces of the transversally innermost recesses, at the front of the link, are located in front of the inner end faces of the matching lateral or transversally outermost recesses, whilst at the back of the link, the inner end faces of the recesses are substantially aligned with each other.

The disadvantage of articulated links of this type is that the gaps between one link and another are large enough for operators to insert their fingers into them, especially between the inner end face of each recess and the tip of the corresponding protrusion. That means there is a risk of injuring the fingers by crushing, especially when the link reaches the start of a curved stretch of the product conveyor.

Conversely, the links whose front and rear edges follow a linear extension, that is to say, do not have any longitudinal protrusions or recesses on them, have the disadvantage of not allowing the products, especially if they are small products, to be supported properly, with the risk of falling off the conveyor and/or being damaged.

Further, although to a lesser extent than links with toothed edges, the links with linear front and rear edges also have the disadvantage of allowing fingers to be inserted and pinched between the rear edge of one link and the front edge of the adjacent one.

Another safety problem of prior art conveyors is that at the end heads for reversal of conveyor belt travel direction, and especially in the zone under the conveyor belt, the belt tends to extend downwards below the end head, with the risk of the operator getting a finger or hand trapped and injured between the conveyor belt and the respective side plate at the end head of the conveyor.

The field also feels the need for a conveyor belt drive wheel which is easy to assemble and/or is such as not to allow waste or dirt to accumulate.

US 6364094 discloses a conveyor with articulated links according to the preamble of claim 1, having a portion for supporting the products, a portion for articulation to the other longitudinally adjacent links, in which the portion for supporting the products has rear and back edges in which are formed longitudinal protrusions and recesses between the protrusion; said recesses being configured as outer and inner recesses in which both of the outer recesses on the rear edge of the link are transversally aligned to the respective inner recesses.

US 2008/017482 discloses a conveyor with articulated links having a portion for supporting the product and a portion for articulation to the other, longitudinally adjacent links of the conveyor; in which the portion for supporting the product has front and rear transversal edges having undulated shape.

US 5697492 discloses a conveyor with articulated links having a portion for supporting the products a portion for articulation to the other, longitudinally adjacent links, in which the portion for supporting the products has rear and back edges in which are formed longitudinal protrusions and recesses between the protrusion and in which the outer recesses on the rear edge of the same link are longitudinally forwardly positioned with respect to the end face of the respective rear central recess.

WO 99/52798 also discloses a conveyor with articulated links having a portion for supporting the products a portion for articulation to the other, longitudinally adjacent links, in which the portion for supporting the products has rear and back edges in which are formed longitudinal protrusions and recesses between the protrusion and in which the outer recesses on the rear edge of the same link are longitudinally forwardly positioned with respect to the end face of the respective rear central recess.

### Disclosure of the Invention

This invention therefore proposes a new and alternative solution to the solutions known up to now and, more specifically, proposes to overcome one or more of the above mentioned drawbacks and/or problems and/or to meet one or more of the needs which may be inferred from the above.

It is therefore provided a conveyor of the type with articulated links, as stated in the appended claim 1.

Thus, it is possible to provide a product supporting surface that is substantially smooth or uniform and particularly suitable for supporting products, especially small products, and where the risk of operators inserting their fingers between the chain links is substantially limited.

It is thus possible to avoid injury to personnel working with the conveyor.

### Brief Description of the Drawings

This and other innovative aspects of the invention are set out in the appended claims and the technical features and advantages of the invention are apparent from the detailed description which follows of non-limiting example embodiments of the conveyor with reference to the accompanying drawings, in which:
- Figure 1 is a perspective view from above of a preferred embodiment of a link forming part of the conveyor according to this invention;
- Figure 2 is a top plan view of the first preferred embodiment of the link;
- Figure 3 is a side view of the first preferred embodiment of the link;
- Figure 4 is a front view of the first preferred embodiment of the link;
- Figure 5 is a bottom view of the first preferred embodiment of the link;
- Figure 6 is a top plan view of a portion of the conveyor belt according to the first preferred embodiment of the invention;
- Figure 7 is a top view, with some parts cut away, of a portion of the first preferred embodiment of the conveyor belt according to the invention;
- Figure 8 is a top view of a portion of the first preferred embodiment of the conveyor belt as it moves along a curved stretch of the horizontal or product supporting surface;
- Figure 9 is a transversal cross section of the first preferred embodiment of the conveyor according to the invention;
- Figure 10 is a perspective view of an end head, for reversal of conveyor travel direction;
- Figure 11A is a side view of the preferred embodiment of an end head;
- Figure 11B is a longitudinal cross section showing the inside of an end head;
- Figure 12 is a top plan view of the preferred embodiment of an end head, for reversal of conveyor travel direction;
- Figure 13 is a perspective view of the end head, without the conveyor belt 10, for reversal of conveyor belt travel direction;
- Figure 14 is a cross section through the line XIV-XIV of Figure 15, showing the side shoulder plate of the end head, for reversal of travel direction;
- Figure 15 is a top view of the end head, without the conveyor belt, for reversal of travel direction, and illustrating in particular a drive wheel not part of the invention;
- Figure 16 is a perspective view of the drive wheel only;
- Figure 17 is a side view of the drive wheel;
- Figure 18 is a top view of the drive wheel;

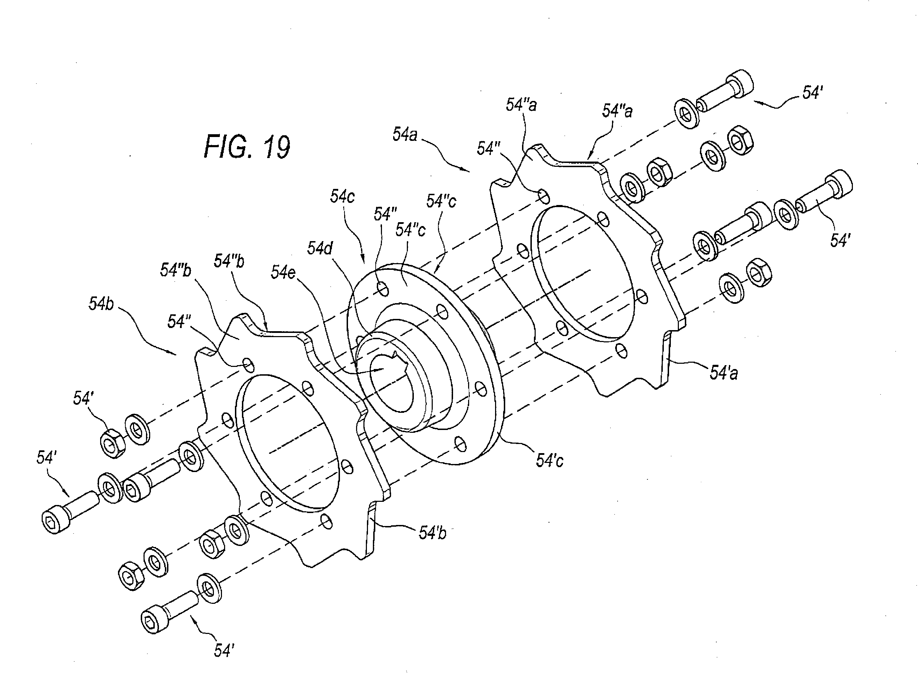

- Figure 19 is an exploded perspective view of the drive wheel;
- Figure 20A is a schematic side view of a further preferred embodiment of a conveyor belt according to the invention, showing the drive end head of the conveyor from which a side shoulder plate has been removed;
- Figure 20B is a schematic top plan view of the further preferred embodiment of a conveyor belt according to the invention, with shoulder plates and drive wheels partly in cross section through line XXB-XXB of Figure 20A;
- Figure 20C is a schematic transversal cross section, through line XXC-XXC of Figure 20A;
- Figure 21 is a perspective view of a link forming part of the further preferred embodiment of the conveyor;
- Figure 22 is a top plan view of the link forming part of the further preferred embodiment of the conveyor;
- Figure 23 is a bottom plan view of the link forming part of the further preferred embodiment of the conveyor;
- Figure 24 is a longitudinal cross section through line XXIV-XXIV of Figure 21, showing the link forming part of the further preferred embodiment of the conveyor according to the invention;
- Figure 25 is a transversal cross section through line XXV-XXV of Figure 21, showing the link forming part of the further preferred embodiment of the conveyor;
- Figure 26 is a plan view of the further preferred embodiment of the conveyor according to the invention, showing in particular an advantageous feature for protecting the operator's finger against injury;
- Figure 27 is a perspective view of the link forming part of an embodiment of a conveyor;
- Figure 28 is a top plan view of the link forming part of an embodiment of a conveyor;
- Figure 29 is a bottom plan view of the link forming part of an embodiment of a conveyor;
- Figure 30 is a transversal cross section through line XXX-XXX of Figure 27, showing the link forming part of an embodiment of a conveyor;
- Figure 31 is a perspective view of an embodiment of a conveyor, showing in particular a feature for protecting the operator's finger against injury;
- Figure 32 is a perspective view of an embodiment of a link forming part of a conveyor.

### Description of the Preferred Embodiments of the Invention

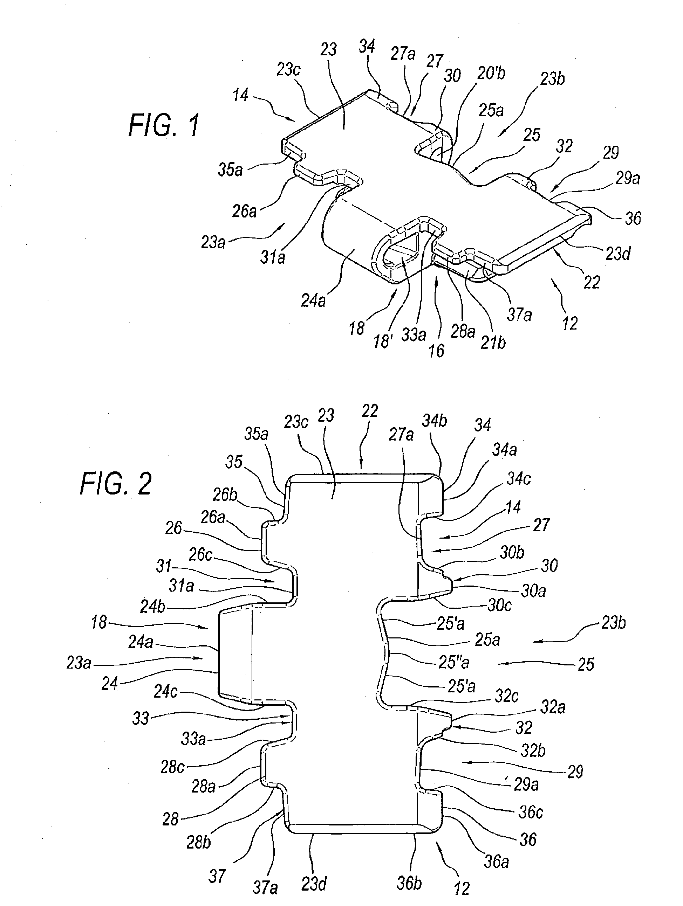

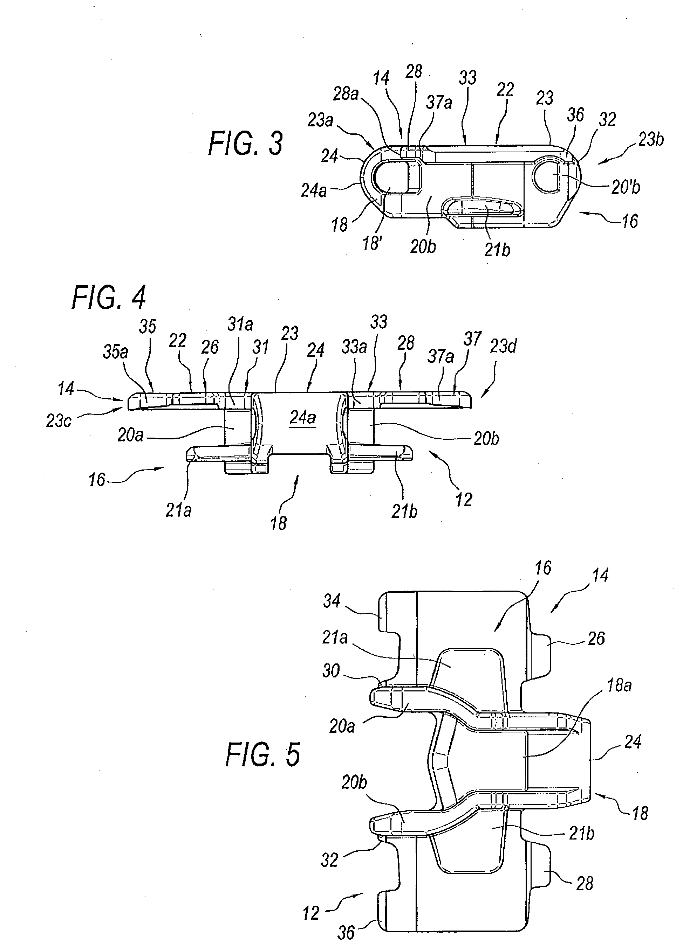

Figures 1 to 9 illustrate a first preferred embodiment 10 of a conveyor of the type with articulated links.

The conveyor 10 comprises means 11 for supporting and guiding an endless conveyor belt 13 which has an upper, product feed stretch 13a and a lower, return stretch 13b.

The conveyor belt 13 comprises a plurality of links 12, each of which is made or die formed as a single part of plastic material and which are connected to each other in articulated manner, in particular through corresponding articulation pins which connect each link to the links adjacent to it, in particular, the link preceding and the link following.

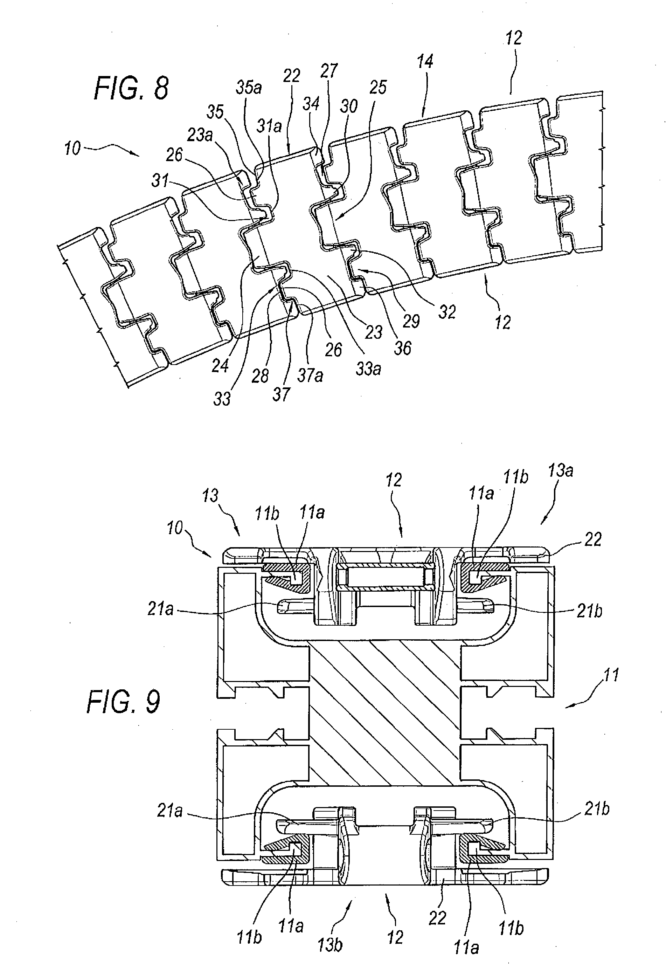

More specifically, as may be inferred from Figure 9, the supporting means comprise a plurality of metal profiles 11 which extend longitudinally and which slidably support the feed and return stretches 13a, 13b of the conveyor belt. The longitudinal profiles may be mounted on corresponding uprights not illustrated in detail in the accompanying drawings.

The longitudinal profiles comprise, for each feed and return stretch, respective first and second sliding guides 11a, 11a which are associated with, or more specifically, fitted to opposite horizontal flanges of the profile.

The sliding guides 11a, 11a, made of a suitable material, constitute means for engaging the underside of the transversal supporting plate 14 of the link on the feed or forward stretch 13a of the belt and for the horizontal perpendicular retaining appendages 21a, 21b on the return stretch 13b of the belt.

In practice, the guides 11a, 11a are interposed between the transversal supporting plate 14 of the link and the perpendicular retaining appendages 21a, 21b, as will become clearer as this description continues.

As may be inferred, each link 12 comprises an upper, product supporting portion 14 and a lower, connecting portion 16 by which it is articulated to the other conveyor links and which is made as one with the supporting portion 14 from which it extends perpendicularly.

The lower or articulation portion of the link also constitutes retaining and guide means, together with the conveyor guides 11a, 11a.

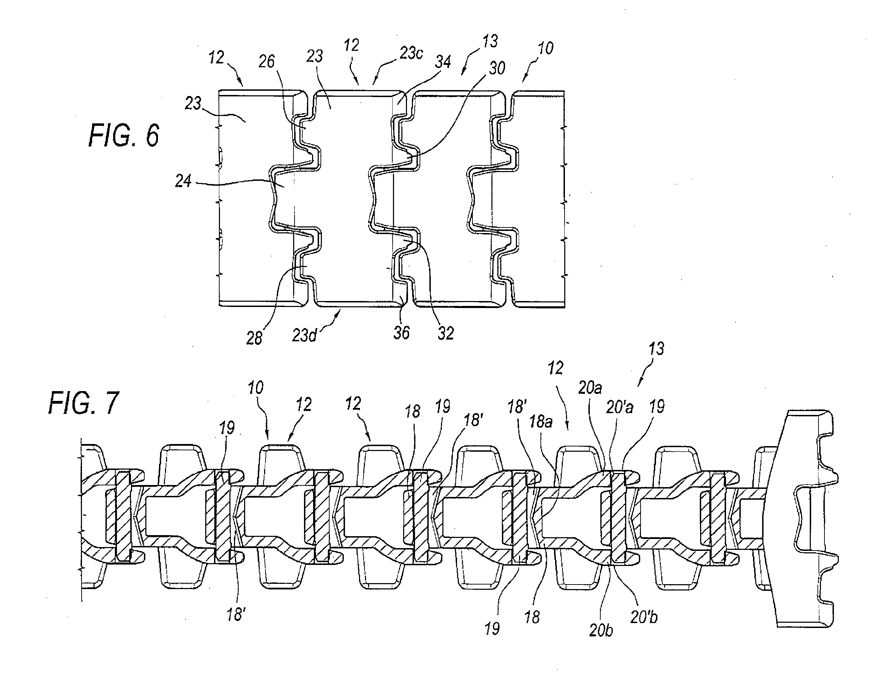

As may be inferred also from Figure 7, the articulation portion 16 of the link has a front central portion 18 for engaging a pin 19 which connects it to the preceding link and which extends into a corresponding transversal through hole 18' of the front engagement portion 18.

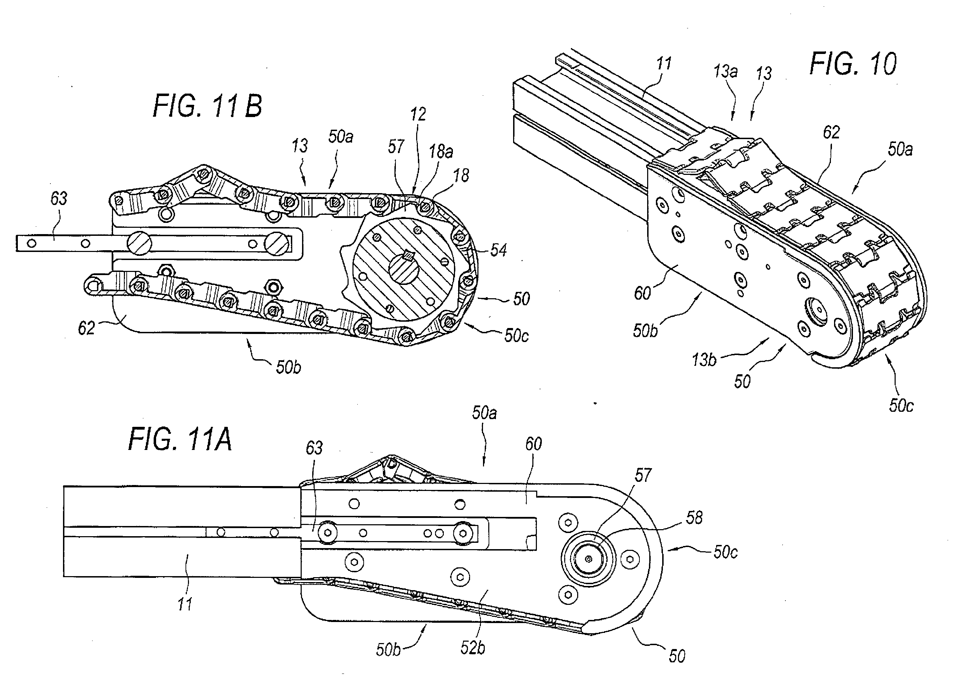

The central portion forms a block 18 having a rear surface 18a for engaging a respective tooth 57 of the drive or transmission wheel 54, as may be inferred from Figure 11b and as will become clearer as this description continues.

As it moves, the conveyor belt defines an upper forward feed stretch and a lower backward return stretch between two opposite ends where respective drive wheels are provided.

More specifically, the conveyor comprises a power-driven drive and transmission wheel at one end of the conveyor belt and an idle drive and transmission wheel at the other end of the conveyor belt.

Each of the drive wheels, whether power-driven or idle, rotates preferably about a horizontal axis of rotation and is mounted at a respective end head for reversal of the conveyor belt travel direction. The drawings illustrate only one end head 50 mounting a respective drive wheel 54, as will become clearer as this description continues.

As illustrated, extending from the front portion 18 are two longitudinal appendages 20a, 20b for the connection and articulation of a pin 19 which extends into corresponding transversal through holes 20'a, 20'b made in the vertical appendages 20a, 20b and which connects the link to the link that follows it, as may be inferred from Figure 7.

As illustrated, the longitudinal appendages 20a, 20b are transversally spaced from each other so as to receive in the space between them a corresponding front central portion 18 of the link which follows it.

As illustrated, the product supporting portion 16 in turn comprises a corresponding horizontal plate 22 which extends transversally and laterally beyond both sides of the articulation portion 16, forming a wide surface 23 for supporting the product, and in particular, a flat and uninterrupted surface.

The supporting surface 23 extends longitudinally between a front transversal edge 23a and a rear transversal edge 23b and a transversally across opposite rectilinear flanks or lateral edges 23c, 23d.

As illustrated, the flanks or lateral edges 23c, 23d are parallel and longitudinal to the link.

The link 12 also has longitudinal protrusions 24, 26, 28 at the front edge 23a and longitudinal protrusions 30, 32, 34, 36 at the rear edge 23b.

These longitudinal protrusions are designed to be inserted into matching recesses or cavities on the adjacent links, that is to say, the link preceding and the link following, and transversally or laterally delimit matching recesses or cavities 25, 27, 29 at the rear edge 23b and recesses or cavities 31, 33, 35, 37 at the front edge 23a, these recesses being designed to receive matching longitudinal protrusions on the adjacent links, that is to say, the link preceding and the link following.

More specifically, the longitudinal protrusions comprise, at the front transversal edge 23a of the link, a wide central or inner protrusion 24 and, at the sides of the latter, respective first and second lateral or outer protrusions 26, 28.

Between the front lateral protrusions 26, 28 and the central or inner protrusion 24 there are respective front central recesses or cavities 31, 33.

Further, externally or laterally of the front lateral protrusions 26, 28 there are front outer recesses or cavities 35, 37, which, therefore, are located laterally (or externally) of a matching front inner recess or cavity 31, 33 in the direction of the outer edge of the link.

More specifically, each of the front longitudinal protrusions 24, 26, 28 has a respective transversal end face 24a, 26a, 28a and opposite lateral faces 24b, 24c, 26b, 26c, 28b, 28c extending longitudinally from the respective transversal end face 24a, 26a, 28a, and rearwards from the latter.

The lateral faces 24b, 24c, 26b, 26c, 28b, 28c of the front longitudinal protrusions 24, 26, 28 delimit the front cavities or recesses 31, 33, 35, 37, these 31, 33, 35, 37 being also delimited by corresponding rear transversal or inner end faces 31a, 33a, 35a, 37a which extend across corresponding protruding portions 24, 26, 28 on the side or laterally of the latter.

At the rear transversal edge 23b, the longitudinal protrusions in turn comprise first and second central or inner protrusions 30, 32 and first and second lateral or outer protrusions 34, 36 located laterally to the respective central protrusions 30, 32.

The rear protrusions 30, 32, 34, 36 have respective transversal end faces 30a, 32a, 34a, 36a and opposite lateral or longitudinal faces 30b, 30c, 32b, 32c, 34b, 34c, 36b, 36c, extending from the transversal end face 30a, 32a, 34a, 36a towards the front part of the link and laterally delimiting corresponding recesses 25, 27, 29, these recessed or longitudinal cavities 25, 27, 29 being also delimited by a corresponding transversal inner or front end face 25a, 27a, 29a extending across corresponding protruding portions 30, 32, 34, 36.

More specifically, there is a wide central or inner recess 25, laterally of which there are first and second outer recesses 27, 29, which are smaller in size, in particular, smaller in width.

More specifically, the outer recesses 35, 37 on the front edge 23a of the link have respective transversal inner end faces 35a, 37a which are longitudinally next to or in front of the respective inner end faces 31a, 33a of the central or inner recesses or cavities 31, 33.

Particularly advantageously, as illustrated here, the outer recesses 35 and 37 on the front edge 23a of the link have respective transversal inner end faces 35a, 37a which are longitudinally in front of the respective inner end faces 31a, 33a of the central or inner recesses or cavities 31, 33, as in this preferred embodiment.

Thus, at the front edge 23a, a product supporting surface is provided which is substantially uninterrupted or uniform, thanks to the presence of protruding portions of the link which are inserted into matching rear cavities of the preceding link, and viceversa, and which is especially suitable for supporting small products without allowing them to fall and without damaging them.

Moreover, the reduced size of the front cavities substantially limits the risk of operators inserting their fingers between the links of the conveyor chain.

According to a further advantageous aspect, the outer recesses or cavities 27 and 29 on the rear edge 23b of the link have respective transversal inner end faces 27a, 29a which are longitudinally behind the inner end face 25a of the rear central recess 25.

Thus, at the rear edge 23b, a product supporting surface is provided which is substantially uninterrupted or uniform, thanks to the presence of protruding portions of the link which are inserted into matching rear cavities of the preceding link and which is especially suitable for supporting small products without allowing them to fall and without damaging them.

Moreover, the reduced size of the rear cavities substantially limits the risk of operators inserting their fingers between the links of the conveyor chain.

Further, at the front transversal edge 23a of this link, the central protrusion 24 extends longitudinally beyond the transversal end faces 27a, 28a of the outer protrusions 26, 28 at the sides of it.

As illustrated, further, at the rear transversal edge 23b of this link, the central or inner protrusions 30, 32 extend in such a way that their respective end faces 30a, 32a are at or longitudinally slightly behind the transversal end faces 34a, 36a of the outer protrusions 34, 36 at the sides of them.

As illustrated, the rear or inner end faces 31a, 33a of the front central recesses 31, 33 are transversally aligned or coplanar with each other, whilst the rear or inner end faces 35a, 37a of the front outer recesses 35, 37 are transversally aligned and oblique, being inclined in the direction of the outer flank of the link, towards the back of the link.

In practice, the rear or inner end faces 35a, 37a of the front outer recesses 35, 37 make an angle, and more specifically, a reduced angle, with the direction transversal to the link.

As illustrated, the inner end or front surfaces 27a, 29a of the rear outer recesses 27, 29 are transversally aligned and oblique, being inclined in the direction of the outer flank of the link, towards the front of the link.

In practice, the front or inner end faces 27a, 29a of the rear outer recesses 27, 29 make an angle, and more specifically, a reduced angle, with the direction transversal to the link.

As illustrated, the front or inner end surface 25a of the rear central recess 25 has a first and a second part 25'a, 25'a, which extend obliquely from a rear central vertex 25"a, being inclined in the direction of the outer flank of the link, towards the front of the link

In practice, the parts 25'a, 25'a of the inner end surface 25a of the rear central recess 25 make an angle, and more specifically, a reduced angle, with the direction transversal to the link.

More specifically, the front outer longitudinal protrusions 26, 28 are wider at the base than they are at the respective opposite free front ends 26a, 28a.

More specifically, lateral faces 26b, 26c, 28b, 28c of the front outer longitudinal protrusions 26, 28 are oblique to the longitudinal direction, the opposite lateral faces 26b, 26c, 28b, 28c of the respective protrusions being divergent towards the back of the link.

More specifically, the faces 26c, 28c on the inner side of the respective protrusions are more inclined than the lateral faces 26b, 28b on the outer side of the protrusions, towards the flanks of the link.

More specifically, the lateral faces 24b, 24c, 26b, 26c, 28b, 28c of the front outer longitudinal protrusions 26, 28 make with the inner end surfaces of the respective recesses an angle that is slightly greater than 90°.

The lateral surfaces 24b, 24c of the front central portion 24 in turn have front parts which converge and rear longitudinal parts which are parallel to each other.

The rear inner and outer longitudinal protrusions 30, 32, 34, 36 are wider at the base than they are at the respective opposite free front ends 30a, 32a, 34a, 36a.

More specifically, the lateral inner faces 24c, 36c of the rear outer longitudinal protrusions 34, 36 are oblique to the longitudinal direction, whilst lateral outer faces 34b, 36b are longitudinal and coincide with the rear parts of the lateral surfaces 23c, 23d of the link.

More specifically, the lateral inner faces 34c, 36c of the rear outer longitudinal protrusions 34, 36 make with the inner end surfaces 27a, 29a of the respective recesses an angle that is slightly greater than 90°.

More specifically, the lateral faces 30b, 30c, 32b, 32c of the rear inner longitudinal protrusions 30, 32 are oblique to the longitudinal direction, the opposite lateral faces 30b, 30c, 32b, 32c of each protrusion being divergent towards the front of the link.

More specifically, the lateral outer faces 30b, 32b of the rear inner longitudinal protrusions 30, 32 make with the inner end surfaces 27a, 29a of the respective recesses an angle that is slightly greater than 90°, whilst the lateral inner faces 30c, 32c extend in corresponding front stretches which are longitudinal and parallel.

More specifically, the corners of the rear longitudinal protrusions 30, 32, where the rear transversal faces 30a, 32a meet the outer faces 30c, 32c of the protrusions 30, 32 themselves, are chamfered

As illustrated, the lower articulation portion 16 of the link also comprises a first and a second horizontal appendage 21a, 21b each extending from the respective perpendicular, or vertical, articulation appendage 20a, 20b towards the respective outer side of the link and which extend from the respective perpendicular, or vertical, articulation appendage 20a, 20b starting from the perpendicular zone of the latter opposite the horizontal supporting plate or portion 22.

The transversal, or horizontal, appendages 21a, 21b are adapted to form means of retaining the link to the supporting means in the direction perpendicular to the feed direction.

The rear protrusions 32, 34, 36, 38 also have a wide-curved connecting surface between the upper surface 23 and the rear faces 32a, 34a, 36a, 38a, preventing further risks of operators "pinching" their fingers in the conveyor.

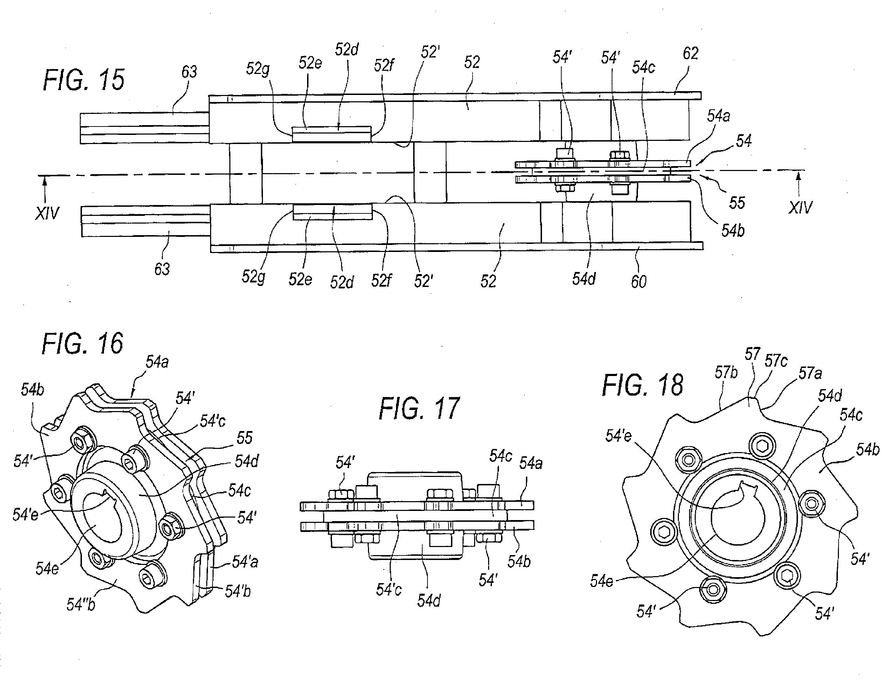

As may be well inferred from Figures 10 to 15, the conveyor 10 advantageously comprises an end head 50, for reversal of conveyor belt 13 travel direction, and which constitutes means for supporting and guiding the belt 13. The end head 50 has an upper stretch 50a, more specifically where the belt is fed forward longitudinally, a lower stretch 50b, more specifically where the belt returns in the longitudinally opposite direction, and a connecting stretch 50c between the upper stretch 50a and the lower stretch 50b.

As illustrated, the end head 50 comprises means 52, 52 for guiding and retaining the belt in the direction perpendicular to the feed direction.

The means 52, 52 for guiding and retaining the belt in the direction perpendicular to the feed direction are positioned between the product supporting means 14 and the appendages 21 a, 21 b for perpendicularly retaining the link.

Advantageously, the means 52, 52 for guiding and retaining the belt in the direction perpendicular to the feed direction are located at the lower stretch 50b of the end head 50.

That way, the belt can be prevented from coming out from under the end head and thus avoiding the risk of the operator's fingers being crushed between the belt and the supporting end head.

As illustrated, the return stretch 50b extends at an upward angle rising in the longitudinal return direction of the conveyor belt.

Also, as illustrated, the end head 50 further comprises means 52, 52 for guiding and retaining the belt in the direction perpendicular to the feed direction and which are located at the upper stretch 50a of the end head.

As illustrated, the upper stretch 50a of the end head 50 is in the form of a horizontal, or substantially horizontal, stretch.

According to another aspect, the end head 50 comprises means 52, 52 for guiding and retaining the belt in the direction perpendicular to the feed direction and which are located at the connecting stretch 50c of the end head 50.

As illustrated, the connecting stretch is in the form of an arcuate stretch.

More specifically, the means 52, 52 for guiding and supporting the conveyor belt extend along the full path of the belt, delimited by the end head 50.

More specifically, the end head 50 houses a drive wheel 54 operating in conjunction with the conveyor belt 13, and more specifically, by meshing with or engaging the rear surface 18a of the front articulation block 18 of the link, as illustrated in Figure 11b.

The wheel 54 is mounted on a respective transversal shaft 54g inserted in freely rotatable manner through matching holes 58 made at the end head 50 in the lateral containment plates which are in turn labelled 60, 62 in the drawings.

In practice, bearings 57 are interposed between the holes and the drive wheel 54 mounting shaft.

The end head 50 comprises opposite lateral containment plates 60, 62 which support the shaft in freely rotatable manner relative to the plates themselves and which are connected to a respective longitudinal profile 11 of the conveyor supporting means.

Come illustrated, the lateral plates 60, 62 are in the form of elongate plates extending in the longitudinal direction of the conveyor and have a generally quadrangular shape.

The plates 60, 62 are connected through corresponding inserts 63 to a respective profile 11 of the conveyor.

The means 52, 52 for guiding and perpendicularly engaging the conveyor belt 13 at the end head 50 are in the form of a respective protuberance protruding perpendicularly from the respective lateral containment plate 60, 62, constituting the side shoulder plates of the end head 50.

The perpendicular guide protuberance 52, 52 is integral with the respective plate 60, 62 constituting the side shoulder plate and containing the end head 50.

The protuberance 52, 52 extends longitudinally and forms the guide path of the conveyor belt along the end head 50 for reversal of the conveyor travel direction.

More specifically, the guide protuberance 52, 52 has a respective upper stretch 52a, 52a for guiding the conveyor belt.

The upper stretch 52a, 52a of the guiding and perpendicularly retaining protuberance 52, 52 extends horizontally or substantially horizontally.

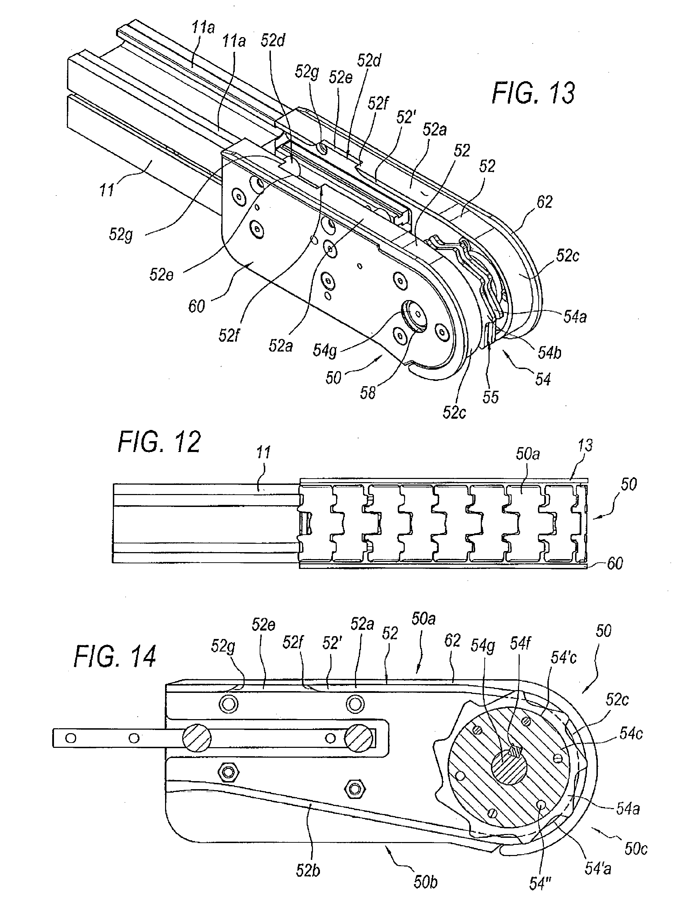

Further, the guiding and perpendicularly retaining protuberance 52, 52 has a respective and advantageous lower stretch 52b, 52b, as may be inferred from Figure 14.

The lower stretch 52b, 52b of the guiding and perpendicularly retaining protuberance 52, 52 of the conveyor belt extends obliquely, that is, it is upwardly inclined at an angle to the longitudinal direction.

The guiding and perpendicularly retaining protuberance 52, 52 of the belt 13 also has a connecting stretch 52c, 52c between the upper stretch 52a, 52a and the lower stretch 52b, 52b.

As illustrated, the connecting stretch 52c, 52c of the guiding and perpendicularly or radially retaining protuberance 52, 52 of the conveyor belt 13 is in the form of a curved stretch and, more specifically, in the form of a semicircle.

As illustrated, the connecting stretch 52c, 52c of the guiding and perpendicularly retaining protuberance 52, 52 of the conveyor belt 13 also has an upwardly directed upstream stretch and a downwardly directed downstream stretch.

In practice, the protuberance 52, 52 starts from a zone which is just behind the outer edges of the respective plates 60, 62, extends towards the transversally inner, or central, part of the end head and is in the form of a respective continuous and suitably shaped strip having a horizontal upper part 52a, 52a, a curved connecting portion 52c, 52c and a lower portion 52b, 52b which is in turn upwardly inclined from the front to the back of the end head along the backward return direction of the guide means 52, 52.

Also advantageously provided at the guiding and perpendicularly retaining means 52, 52 of the conveyor belt are corresponding means 52d, 52d for fitting the link on the inside of the guide means 52, 52, or more specifically, for fitting corresponding transversal appendages 21a, 21 b of the link which are adapted to perpendicularly engage the link with the guiding and supporting means 52, 52 on the inside of the guiding and supporting means 52, 52.

Fitting a link, or rather its perpendicularly retaining appendages 21a, 21 b, under or inside the guides is necessary when the belt is installed on the mounting frame and the last pin of the chain is inserted, thereby giving the latter a closed loop or endless configuration.

These means for fitting the link to the guide means of the end head greatly facilitate installation and allow the provision of an end head with a closed configuration, with obvious advantages in terms of operator safety.

As illustrated, the means for fitting the link on the inside of the guide means 52, 52 are in the form of corresponding indentation means 52d, 52d provided in the guide means 52, 52.

The means for fitting the link inside the guide means 52, 52 are advantageously provided on the upper stretch 52a, 52a of the guide means.

The indentation means are in the form of a respective indentation 52d, 52d provided in the guiding and perpendicularly retaining protuberance 52, 52.

More specifically, there are first and second indentations 52d, 52d which are transversally aligned to allow the conveyor belt to be inserted inside the guiding and perpendicularly retaining means 52, 52.

Each insertion indentation 52d, 52d extends from the inner edge 52', 52' of the guiding and perpendicularly retaining means 52, 52 for a certain stretch within the guiding and perpendicularly retaining means 52, 52 themselves.

More specifically, each insertion indentation 52d, 52d has a front transversal edge 52f, a rear transversal edge 52g and a longitudinal inner edge 52e which extends between the front transversal edge 52f and the rear transversal edge 52g.

The front edges 52f, 52f of the indentations 52d, 52d are transversally aligned with each other, as are the rear edges 52g, 52g.

As illustrated, the longitudinal inner edge 52e is spaced from the respective inside edge 52' of the respective protuberance 52 by a length, or depth, which is less than half the width of the respective strip or perpendicular guiding protuberance 52.

As illustrated, each drive wheel 54 is advantageously composed of a first and a second part 54a, 54b, which are placed alongside each other and which form between them a transversal space 55 which permits waste to drop by gravity.

Thus, the wheel can be installed very easily and avoids the build-up of waste.

In practice, the wheel 54 comprises first and second gear wheels 54a, 54b which mesh with the conveyor belt, which are transversally spaced from each other and each of which has a specially shaped outer profile 54'a, 54'b forming meshing teeth 57 and flat faces 54"a, 54"b opposite each other.

Advantageously, the wheel comprises a flange 54c for mounting the respective gear wheel.

More specifically, between the first and the second gear wheel 54a, 54b there is an interposed flange 54c for mounting the gear wheels 54a, 54b and to which the gear wheels are fastened by bolts 54' inserted in holes 54" which are peripherally distributed on the flange 54c and on the gear wheels 54d.

The flange 54c for mounting the gear wheels 54a, 54b has a cylindrical outside surface 54'c which is radially recessed relative to the shaped profile 54'a, 54'b defining the teeth 54'a, 54'b of the gear wheels in such a way as to form a space permitting waste to drop by gravity between the gear wheels 54a, 54b.

In practice, the diameter of the mounting flange 54a is smaller than the outside diameter of the gear wheels and also smaller than the root diameter of the gear wheels 54a, 54b.

The mounting flange 54c also has opposite flat lateral faces 54"c for abutting against a radially internal circumferential zone of the corresponding lateral faces 54"a, 54"b of the respective wheels 54a, 54b.

Advantageously, the wheel 54 also comprises a thick central hub 54d having a generally cylindrical shape.

In practice, the mounting flange 54c is supported by the generally cylindrical central hub 54d, relative to which the flange extends radially, being transversally centred about the hub 54d itself.

As illustrated, the central hub 54d has an axial through hole 54e for engagement and connection, by keying, of a corresponding wheel mounting shaft 54g, illustrated in Figures 11B and 14, which, when the wheel is a drive wheel, is in the form of a suitable power-driven shaft.

The keyed connection of the hub to the drive shaft is obtained thanks to the radial keyway 54'e which extends from the cylindrical hole 54e into the body of the hub and into which a matching key 54f is inserted.

Advantageously, the mounting flange 54c is made as one with the central hub 54d, forming a single die-formed part of plastic material.

Although the single mounting member 54c, 54d made of plastic material constitutes an especially preferred embodiment, other embodiments are also imaginable where only the mounting flange 54c or only the central hub 54d is made of plastic material.

The gear wheels 54a, 54b are made of metal and are preferably obtained from a metal sheet suitably blanked to reproduce the toothed profile of each wheel.

This provides a gear wheel that is at once robust and easy to make and assemble.

As illustrated, the profile of each of the gear wheels 54a, 54b defines a plurality of circumferentially distributed gear teeth, forming a generally sawtooth shaped profile where each gear tooth 57 has a leading engagement flank 57a and a trailing flank 57b and a circumferential end connecting stretch 57c between the leading flank 57a and the trailing flank 57b of each tooth.

As illustrated, the leading flank 57a and the trailing flank 57b are substantially linear in shape.

As illustrated, the breadth of the trailing flank 57b in the circumferential direction is larger than the breadth of the leading flank 57a in the circumferential direction, and more specifically, much larger than the breadth of the leading flank 57a. In particular, the breadth of the trailing flank 57b in the circumferential direction is twice as large as the breadth of the leading flank 57a in the circumferential direction.

In another embodiment, not illustrated in the accompanying drawings, the conveyor might have a link similar to the link of the first embodiment described above and might also be equipped with means which permit waste to drop by gravity and which are in the form of a respective hole made in the upper horizontal plate 22 of the link 12, in a central zone of the latter. The hole which permits waste to drop by gravity is as illustrated and described in European patent no. EP 1654175 to the same applicant as this invention.

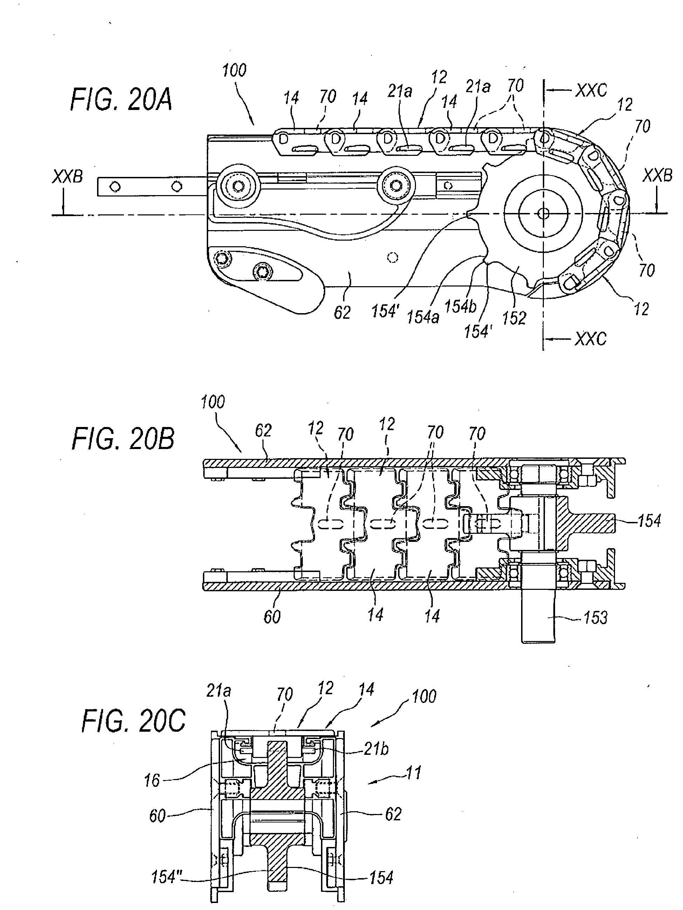

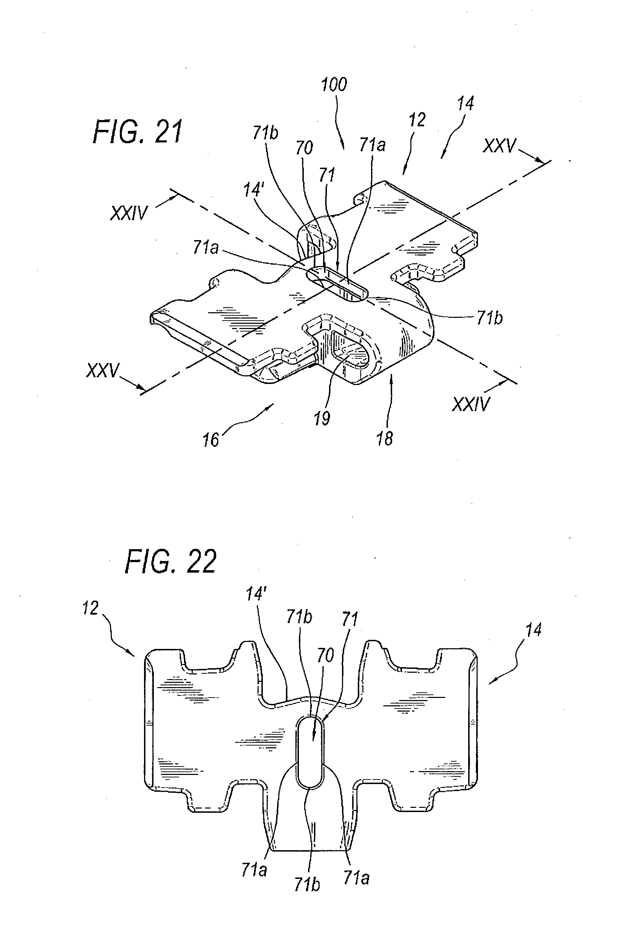

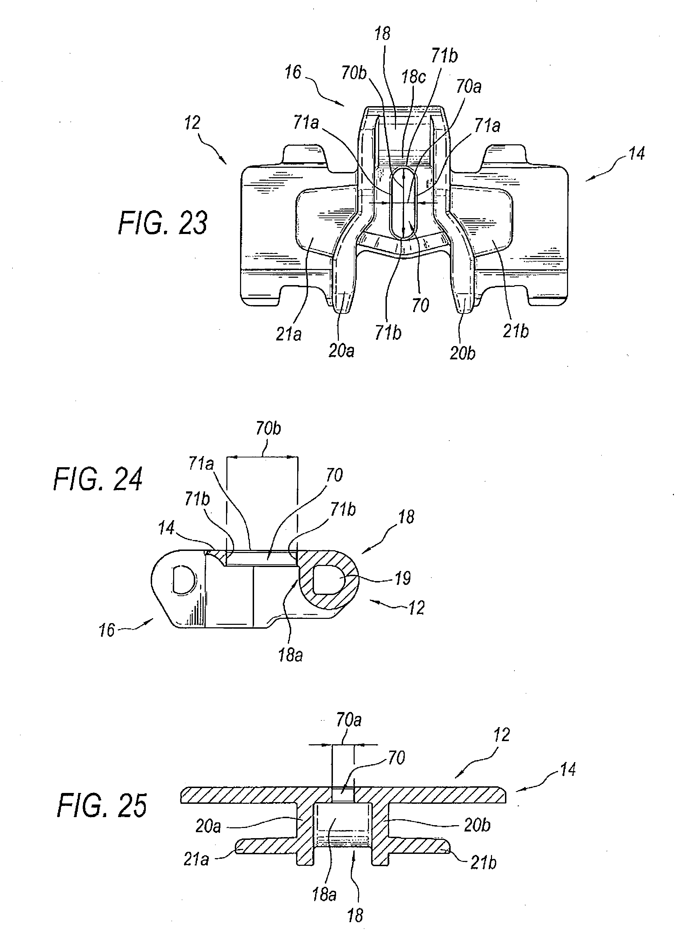

Figures 20A to 26 illustrate a further embodiment 100 of a conveyor having a respective link. More specifically, the components of this embodiment which are like those of the preceding preferred embodiment are, in the drawings, labelled with the same numerals and, to avoid making this description too lengthy, are not commented upon in detail again.

In this embodiment, the conveyor thus has links 12 which are adapted to form an endless belt with articulated links which is similar in most respects to the one of the preceding embodiment from which it differs in that it has advantageous means 70 allowing the passage of waste material through the link, the waste being, more specifically dust or shreds of paper, plastic film and the like, in such a way that the waste can easily drop by gravity to the floor from where it can be swept away by operators, thereby preventing its accumulation in certain zones of the belt which would cause malfunctioning and jamming of the conveyor belt itself.

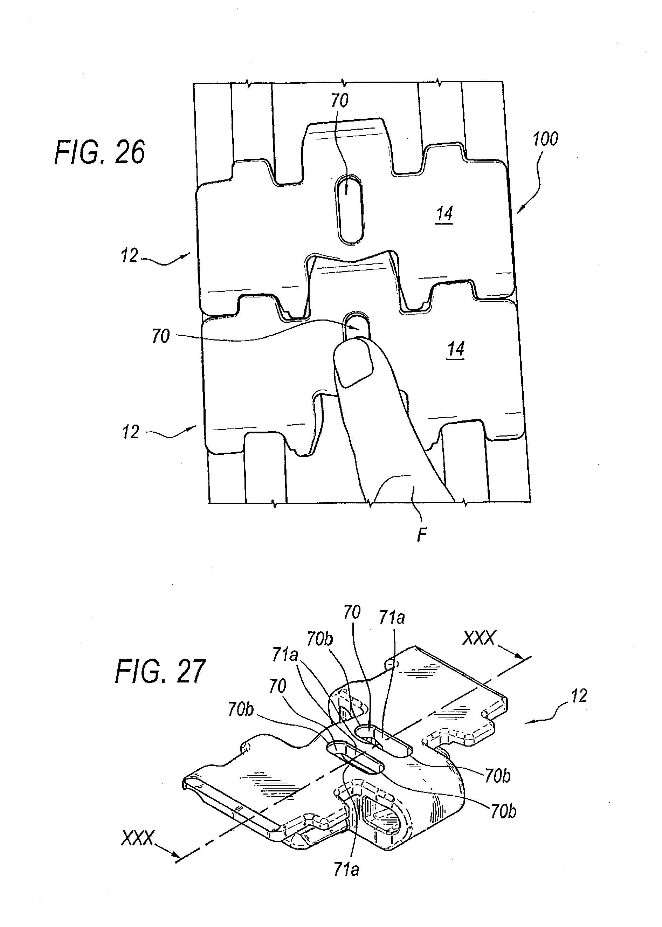

Advantageously, the waste passage means 70 comprise a respective hole 70 which passes perpendicularly through the link and which is delimited by a respective lip 71, the lip 71 being shaped in such a way as to prevent the operator from inserting a finger F into it, thereby avoiding the risk of crushing and injuring the finger, as may be well inferred from Figure 26.

More specifically, the waste passage hole or means 70 has opposite lip faces or edges 71 a, 71 a delimiting between them a minimum breadth or distance 70a of the hole, this minimum breadth being less than the transversal breadth of the operator's finger F, so as to prevent the finger from being inserted into or through the hole 70, and thus avoiding the risk of crushing or injuring the finger.

In practice, the shape of the hole 70 is such as to prevent operators from inserting their fingers into it, thereby avoiding any risk of crushing and injuring the fingers.

Further, the waste passage means 70 comprise a respective hole, and more specifically, a hole which passes perpendicularly through the link and which is delimited by a respective lip 71, the hole having opposite faces or edges 71b, 71b of the lip or hole, which delimit between them a maximum breadth or distance 70b which is greater than the transversal breadth of the operator's finger F, so as to create a hole large enough to allow ample space for a large amount of waste to pass through the hole.

As illustrated, the lip 71, delimiting the waste passage hole 70, has an elongate shape with a minimum breadth or distance 70a and maximum breadth or distance 70b, between corresponding opposite lip faces or edges 71a, 7 1 a and 71 b, 71 b, respectively.

Thus, it is possible to obtain in the body of the link a waste passage hole which allows a large quantity of waste to pass through it while at the same time preventing the operator from accidentally inserting a finger into it.

More specifically, the lip 71 which delimits the respective waste passage hole 70 has opposite longitudinal stretches or edges 71a, 71b.

Further, the lip 71 which delimits the respective waste passage hole also has opposite longitudinal stretches or edges 71a, 7 1 a which are parallel to each other.

Further, the lip 71 delimiting the waste passage hole 70 has opposite longitudinal stretches or edges 71a, 7 1 a which define the minimum breadth 70a of the hole.

Further, the lip 71 delimiting the respective waste passage hole 70 has opposite transversal stretches or edges 71b, 71b, being more specifically transversal stretches or edges 7 1 b, 7 1 b having an arcuate shape and connecting to opposite longitudinal stretches or edges 71a, 71a of the respective side 71.

In practice, the lip 71 delimiting the waste passage hole 70 has opposite transversal stretches or edges 7 1 b, 7 1 b which defme the maximum breadth 70d of the hole 70.

More specifically, the through hole 70 is made, or extends, in the transversal, or horizontal, supporting plate 14 of the link 12.

Further, the hole 70 extends across opposite perpendicular appendages 20a, 20b for the connection and articulation of the link, and more specifically, at a median longitudinal part of the appendages themselves.

The hole 70 extends longitudinally between the rear face 18a of the front block 18 of the link, which is adapted to receive the tooth of the conveyor belt wheel, and a zone in the vicinity of a corresponding rear edge 25a of the transversal, or horizontal, supporting plate 14 of the link 12, and more specifically, substantially at the thin or tapered rear edge 14' of the transversal plate 14.

More specifically, in this particular embodiment of the conveyor, the waste passage means comprise a single hole 70 between the perpendicular appendages 20a, 20b for the connection and articulation of the link to the link which follows.

More specifically, the single waste passage hole 70 is positioned centrally between the perpendicular appendages 20a, 20b for the connection and articulation of the link.

The drive wheel 154 of this particular embodiment is substantially the same as that described in European patent no. EP1654175 to the same applicant as this invention.

More specifically, the toothed wheel 154 extends vertically in a central position under the forward moving section of the conveying means and is rotationally driven by a shaft 152 that is rotatably mounted on the side shoulder plates 60, 62.

The toothed wheel 154 has a disc-shaped central body and a plurality of teeth 154' extending radially from it. The teeth 154' have length and thickness such that they engage only with the rear engagement surface 18a of the respective chain link, that is to say, the rear surface of the block 18 between the longitudinal walls or appendages 20a, 20b of the link

Further, the wheel tooth has a square profile with at least one sharp comer, between the surfaces 154a, 154b of the tooth, which can create a rubbing action that advantageously rubs or scrapes off dust or other waste from the rear engagement surface 18a of the link.

Further, as may be inferred from Figures 9 and 20C, in this and in the preceding embodiment, there is a minimum space between the lateral flanks of each link and the underlying supporting profile 11 or side shoulder plate 60, 62, thus preventing insertion of, and injury to, the operator's finger

Figures 27 to 31 illustrate an embodiment 200 of a conveyor, not part of the invention.

This embodiment has components which are similar to those of the preceding embodiments and which are labelled with the same reference characters, and thus not commented upon in detail again so as to avoid making this description too lengthy.

This embodiment 200 of a conveyor not part of the invention has a respective endless conveyor belt link which, in this case, too, is provided with waste passage means 170, 170, which have an elongate shape that is the same as the shape of the hole 70 of the particular embodiment and which are located in a similar position on the transversal supporting plate, and that is, between the rear face 18a of the front engagement block 18 of the link 12 and a respective rear end edge 14' of the link itself and between the perpendicular appendages 20a, 20b for the connection and articulation of the link to the link which follows on the same conveyor belt.

The embodiment of a conveyor, or of a conveyor link 12, differs from the particular embodiment of the conveyor, or conveyor link, in that the link has, instead of a single elongate hole 70 as in the particular embodiment, a first and a second elongate hole 170, 170, placed alongside each other and, more specifically, placed alongside each other transversally.

In practice, as illustrated, the elongate holes 170, 170 have a minimum breadth or width 70a which is slightly less than that of the single hole 70 of the second preferred embodiment but combined together have a larger area for the passage of the waste through the conveyor belt link 12.

As illustrated, the first and second holes 170, 170 have longitudinal stretches or edges 71a which extend parallel to each other.

As illustrated, the first and second holes 170, 170 are positioned symmetrically about the longitudinal centre line of the link.

Further, the first and second holes 170, 170 placed alongside each other have the same transversal width or breadth 70a, 70a.

Further, the first and second holes 170, 170 placed alongside each other have the same longitudinal length or breadth 70b, 70b.

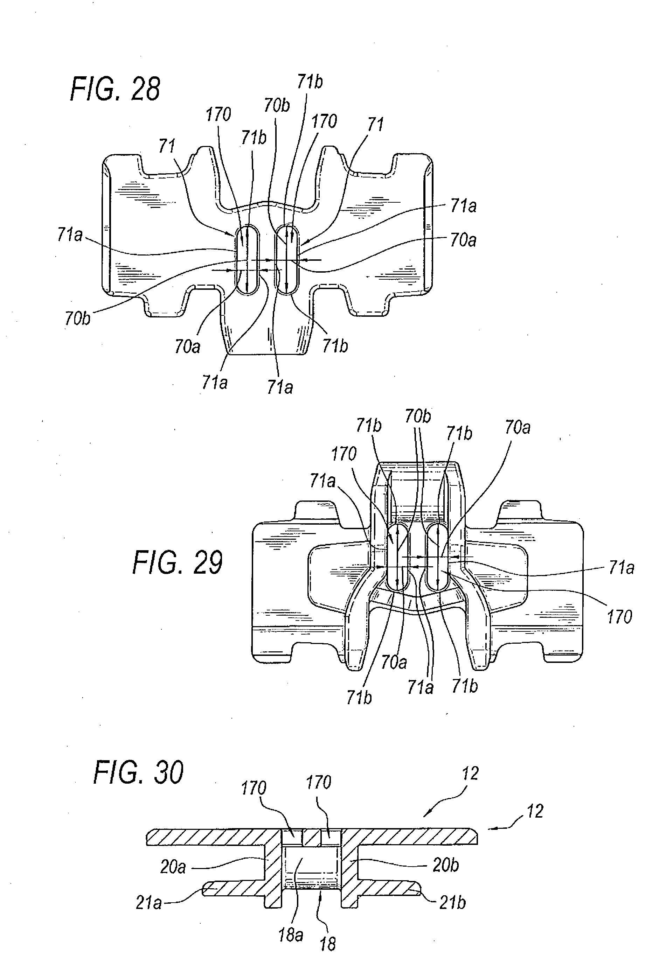

More specifically, as illustrated, the first and second waste passage holes 170, 170 have respective lateral or outer edges or stretches 71a, 71a at, or substantially coinciding with, or on the extension of (as may be well inferred from Figure 29), the inside face of the respective articulation appendages 20a, 20b, and that is, at the face of each perpendicular appendage 20a, 20b that is directed towards the other, opposite perpendicular appendage 20b, 20a of the link.

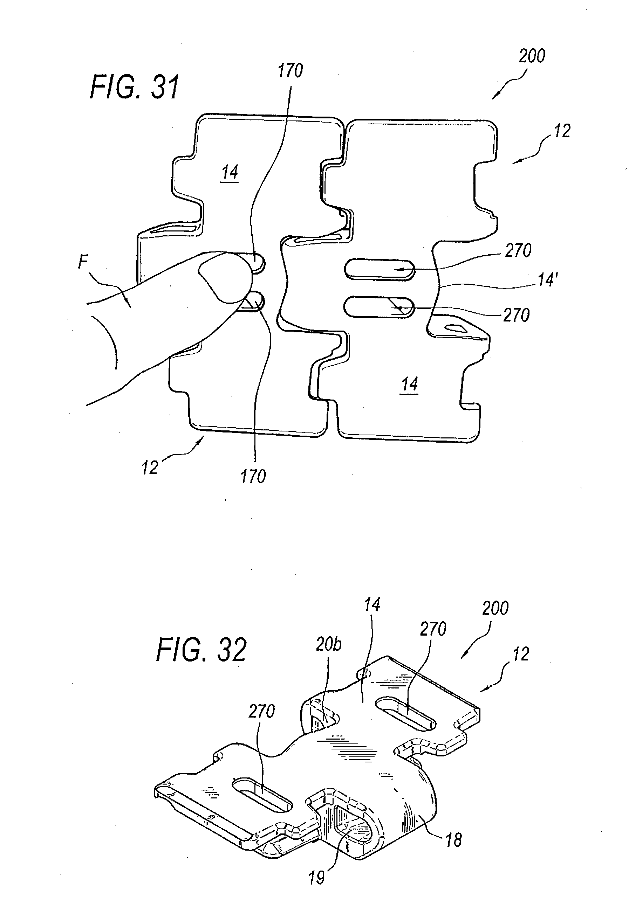

A further embodiment of a conveyor link not part of the invention is illustrated in Figure 32. The link of Figure 32, where the components that are similar to those of the preceding embodiment are labelled with the same reference characters and, to avoid making this description too lengthy, are not commented upon in detail again, has on the transversal plate 14, on the outside of the perpendicular connection and articulation appendages 20a, 20b, a respective hole 270, and more specifically a first and a second hole 270, 270.

Each hole 270 is also in the form of an elongate hole whose dimensions are the same as those of the elongate holes 70, 170, 170 of the preceding embodiments described above

In practice, the link of this further embodiment of a conveyor not part of the invention differs from the preceding ones only in that the waste passage holes 270, 270 are made on the part of the transversal plate 14 that is on the outside of the central zone between the perpendicularly retaining connection appendages 20a, 20b.

The elongate hole denoted by the reference numeral 270, thus has an elongate shape similar in all respects to the holes 70, 170 of other embodiments described above.

As illustrated, each hole 270 extends on the transversal, or horizontal, supporting plate 14 of the link and, more specifically, is located transversally on the outside of the space between the perpendicular connection and articulation appendages 20a, 20b, at a position between a front protrusion of the link and a corresponding rear recess of the link.

As illustrated, the first and second longitudinally extended holes 270, 270 made on the transversal supporting plate 14 of the link are positioned symmetrically about the longitudinal centre line of the link.

The link thus comprises a first and a second hole 270, 270 which extend on the transversal, or horizontal, supporting plate 14 of the link and are symmetrically positioned about the longitudinal centre line of the link and transversally on the outside of the perpendicular connection and articulation appendages 20a, 20b.

More specifically, in all the embodiments, the respective waste passage hole has a minimum breadth or, more specifically, a transversal width which is preferably between 2 mm and 8 mm

In practice, the invention as stated in claim 1 thus provides a conveyor of the type comprising a belt made from articulated links, where the distances between the links in the horizontal curved stretch (or in the curved stretch of the supporting surface of the conveyor belt), as illustrated in Figure 8, are minimal, even in the outside (radial) stretch of the links, so as to prevent the operators from getting their fingers trapped and crushed in the conveyor.

The invention described is susceptible of industrial application.

It would be obvious to one skilled in the art that several changes and modifications can be made to the invention without departing from the scope of the invention, described in the appended claims

## Claims

1. A conveyor (10) of the type with articulated links (12), comprising means (11) for supporting and guiding an endless conveyor belt (13) having an upper, product feed stretch and a lower, return stretch; the conveyor belt (13) comprising a plurality of interconnected articulated links; each link (12) comprising a portion (14) for supporting the product and a portion (16) for articulation to the other, longitudinally adjacent links of the conveyor; the portion (14) for supporting the product has front and rear transversal edges (23a, 23b) with longitudinal protrusions on them, being transversely outer protrusions (26, 28; 34, 36) and transversely inner protrusions (24; 30, 32), which are designed to be inserted into matching recesses in the adjacent links and which laterally delimit matching recesses on them, being transversely outer recesses (27, 29; 35, 37) and transversely inner recesses (25; 31, 33), respectively, for receiving matching protrusions on the adjacent links; **characterized in that** the outer recesses (35, 37) on the front edge (23a) of the link have respective transversal outermost end faces or surfaces (35a, 37a) which are longitudinally next to or in front of respective innermost end faces or surfaces (31a, 33a) of the front central recesses (31, 33) and **in that** the rear outer recesses (27, 29) on the rear edge (23b) of the link have respective transversal innermost end faces or surfaces (27a, 29a) which are longitudinally behind the innermost end face (25a) of the central recess (25).

2. The conveyor according to claim 1, **characterized in that** the articulation portion (16) of the link has a front engagement portion (18) for a pin (19) which connects it to the link preceding it and from which extends a pair of perpendicular appendages (20a, 20b) for the engagement and articulation of a pin (19) which connects it to the link which follows it, the appendages being transversely spaced in such a way as to receive a matching central portion of the link which follows.

3. The conveyor according to the claim 2, **characterized in that** it comprises a first and a second transversal appendage (21a, 21b) extending from the respective perpendicular appendage (20a, 20b) and constituting means of retention in a direction perpendicular to the link.

4. The conveyor according to any of the foregoing claims, **characterized in that** the product supporting portion (14) comprises a corresponding plate (22) which extends transversally on both sides of the articulation portion (16) constituting a wide supporting surface (23) extending longitudinally between the front transversal edge (23a) and the opposite rear transversal edge (23b).

5. The conveyor according to any of the foregoing claims, **characterized in that** the longitudinal protrusions comprise, on the front transversal edge (23a), a large central protrusion (24) and, on each side of the latter, respective lateral or outer protrusions (26, 28) between which there are respective front inner recesses (31, 33) and outside of which there are front outer recesses (35, 37).

6. The conveyor according to any of the foregoing claims, **characterized in that** the longitudinal protrusions comprise, on the rear transversal edge (23b), a first and a second central or inner protrusion (30, 32) and lateral outer protrusions (34, 36) each located laterally of a respective central protrusion (30, 32).

7. The conveyor according to any of the foregoing claims, **characterized in that** the longitudinal protrusions (24, 26, 28, 30, 32, 34, 36) have respective transversal end faces (24a, 26a, 28a, 30a, 32a, 34a, 36a) and opposite lateral faces (24b, 24c, 26b, 26c, 28b, 28c, 30b, 30c, 32b, 32c, 34b, 34c, 36b, 36c) laterally delimiting matching cavities or recesses (31, 33, 35, 37, 25, 27, 29) for receiving a matching longitudinal protrusion on the adjacent link.

8. The conveyor according to any of the claims 5-7, **characterized in that**, on the front transversal edge (23a), the central protrusion (24) extends longitudinally beyond the protrusions (26, 28) on each side of it.

9. The conveyor according to any of the claims 6-8, **characterized in that**, on the rear transversal edge (23b), the central or inner protrusions (30, 32) extend in such a way that their respective end faces (30a, 32a) are substantially at or longitudinally a little way behind the respective transversal end faces (34a, 36a) of the outer protrusions (34, 36) on each side of them.

10. The conveyor according to any of the foregoing claims, **characterized in that** the innermost end surfaces (31a, 33a) of the front central recesses (31, 33) are transversally aligned and coplanar with each other.

11. The conveyor according to any of the foregoing claims, **characterized in that** the outermost end surfaces (35a, 37a) of the front outer recesses (35, 37) are transversally aligned with each other, and more specifically, are inclined towards the rear of the link in the direction of the outer side of the link.

12. The conveyor according to any of the foregoing claims, **characterized in that** the innermost, or front end surfaces (27a, 29a) of the rear outer recesses (27, 29) are transversally aligned with each other, and more specifically, are inclined towards the front of the link in the direction of the outer side of the link.

13. The conveyor according to any of the claims 6-12, **characterized in that** the rear protrusions (30, 32, 34, 36) have a gently curved surface connecting the respective top surface (23) and the rear face (30a, 32a, 34a, 36a).

14. The conveyor according to any of the foregoing claims, **characterized in that** the link (12) comprises waste passage means (70, 170, 270) and **in that** the waste passage means (70, 170, 270) comprise a respective through hole whose shape is such as to prevent the operator from inserting a finger into the hole (70, 170, 270) itself.

15. The conveyor according to claim 14, **characterized in that** a lip (71) delimiting the waste passage hole (70, 170, 170) has an elongate hole having a minimum breadth or distance (70a) and a maximum breadth or distance (70b) between corresponding opposite faces or edges (71a, 71a; 71b, 71b) of the lip; the minimum breadth or distance (70a) between opposite faces or edges (71a, 71a) of the hole being less than the breadth of the operator's finger (F) and the maximum breadth or distance (70b) between opposite faces or edges (71b, 71b) of the hole being greater than the breadth of the operator's finger (F).

## Patentansprüche

1. Förderer (10) des Typs mit Gelenkverbindungen (12), umfassend Mittel (11) zum Stützen und Führen eines endlosen Förderbands (13), aufweisend eine obere Produktzuführungsstrecke und eine untere Rückführungsstrecke, wobei das Förderband (13) eine Vielzahl an miteinander verbundenen Gelenkverbindungen umfasst und jede Verbindung (12) einen Abschnitt (14) zum Stützen des Produkts und einen Abschnitt (16) für die Gelenkverbindung mit den anderen, längs angrenzenden Verbindungen des Förderers umfasst; der Abschnitt (14) zum Stützen des Produkts weist front- und rückseitige quer verlaufende Kanten (23a, 23b) mit Längsvorsprüngen darauf auf, bei denen es sich um quer verlaufende äußere Vorsprünge (26, 28; 34, 36) und quer verlaufende innere Vorsprünge (24; 30, 32) handelt, die ausgestaltet sind, um in passende Vertiefungen in den angrenzenden Verbindungen eingesetzt zu werden, und die seitlich passende Vertiefungen darauf begrenzen, bei denen es sich um quer verlaufende äußere Vertiefungen (27, 29; 35, 37) und quer verlaufende innere Vertiefungen (25; 31, 33) handelt, jeweils um passende Vorsprünge auf den angrenzenden Verbindungen aufzunehmen; **dadurch gekennzeichnet, dass** die äußeren Vertiefungen (35, 37) an der frontseitigen Kante (23a) der Verbindung jeweilige quer verlaufende äußerste Endseiten oder - oberflächen (35a, 37a) aufweisen, die in Längsrichtung in der Nähe der oder gegenüberliegend den jeweiligen innersten Endseiten oder -oberflächen (31a, 33a) der frontseitigen mittigen Vertiefungen (31, 33) angeordnet sind, und dadurch dass, die rückseitige äußere Vertiefungen (27, 29) an der rückseitigen Kante (23b) der Verbindung jeweilige quer verlaufende innerste Endseiten oder - oberflächen (27a, 29a) aufweisen, die längs hinter der innersten Endseite (25a) der mittigen Vertiefung (25) angeordnet sind.

2. Förderer nach Anspruch 1, **dadurch gekennzeichnet, dass** der Gelenkabschnitt (16) der Verbindung einen frontseitigen Eingriffsabschnitt (18) für einen Zapfen (19) aufweist, der diesen mit der davor befindlichen Verbindung verbindet und aus dem sich ein Paar senkrechter Fortsätze (20a, 20b) für den Eingriff und die Gelenkverbindung eines Zapfens (19) erstreckt, der diesen mit der Verbindung, die diesem folgt, verbindet, wobei die Fortsätze quer so beabstandet sind, dass sie einen passenden mittigen Abschnitt der nachfolgenden Verbindung aufnehmen.

3. Förderer nach Anspruch 2, **dadurch gekennzeichnet, dass** er einen ersten und einen zweiten quer verlaufenden Fortsatz (21a, 21b) umfasst, der sich vom jeweiligen senkrechten Fortsatz (20a, 20b) erstreckt und Rückhaltemittel in einer senkrecht zur Verbindung verlaufenden Richtung darstellt.

4. Förderer nach einem der vorhergehenden Ansprüche, **dadurch gekennzeichnet, dass** der das Produkt stützende Abschnitt (14) eine entsprechende Platte (22) umfasst, die sich quer auf beiden Seiten des Gelenkabschnitts (16) erstreckt und eine breite Stützoberfläche (23) darstellt, die sich längs zwischen der frontseitigen quer verlaufenden Kante (23a) und der entgegengesetzten rückseitigen quer verlaufenden Kante (23b) erstreckt.

5. Förderer nach einem der vorhergehenden Ansprüche, **dadurch gekennzeichnet, dass** die Längsvorsprünge an der frontseitigen quer verlaufenden Kante (23a) einen großen mittigen Vorsprung (24) und an jeder Seite des Letzteren jeweilige seitliche oder äußere Vorsprünge (26, 28) umfassen, zwischen denen sich jeweilige frontseitige innere Vertiefungen (31, 33) befinden, an deren Außenseite sich frontseitige äußere Vertiefungen (35, 37) befinden.

6. Förderer nach einem der vorhergehenden Ansprüche, **dadurch gekennzeichnet, dass** die Längsvorsprünge an der rückseitigen quer verlaufenden Kante (23b) einen ersten und einen zweiten mittigen oder inneren Vorsprung (30, 32) und seitliche äußere Vorsprünge (34, 36) umfassen, die jeweils seitlich eines jeweiligen mittigen Vorsprungs (30, 32) angeordnet sind.

7. Förderer nach einem der vorhergehenden Ansprüche, **dadurch gekennzeichnet, dass** die Längsvorsprünge (24, 26, 28, 30, 32, 34, 36) jeweilige quer verlaufende Endseiten (24a, 26a, 28a, 30a, 32a, 34a, 36a) und entgegengesetzte seitliche Seiten (24b, 24c, 26b, 26c, 28b, 28c, 30b, 30c, 32b, 32c, 34b, 34c, 36b, 36c) aufweisen, die seitlich passende Hohlräume oder Vertiefungen (31, 33, 35, 37, 25, 27, 29) begrenzen, um einen passenden seitlichen Vorsprung auf der angrenzenden Verbindung aufzunehmen.

8. Förderer nach einem der Ansprüche 5 bis 7, **dadurch gekennzeichnet, dass** sich der mittige Vorsprung (24) an der frontseitigen quer verlaufenden Kante (23a) längs jenseits der Vorsprünge (26, 28) an jeder Seite davon erstreckt.

9. Förderer nach einem der Ansprüche 6 bis 8, **dadurch gekennzeichnet, dass** sich die mittigen oder inneren Vorsprünge (30, 32) an der rückseitigen quer verlaufenden Kante (23b) so erstrecken, dass sich deren jeweilige Endseiten (30a, 32a) an oder längs etwas hinter den jeweiligen quer verlaufenden Endseiten (34a, 36a) der äußeren Vorsprünge (34, 36) an jeder Seite davon befinden.

10. Förderer nach einem der vorhergehenden Ansprüche, **dadurch gekennzeichnet, dass** die innersten Endoberflächen (31a, 33a) der frontseitigen mittigen Vertiefungen (31, 33) quer ausgerichtet und miteinander auf der gleichen Ebene liegend angeordnet sind.

11. Förderer nach einem der vorhergehenden Ansprüche, **dadurch gekennzeichnet, dass** die äußersten Endoberflächen (35a, 37a) der frontseitigen äußeren Vertiefungen (35, 37) quer zueinander ausgerichtet sind, und insbesondere zur Rückseite der Verbindung in Richtung der äußeren Seite der Verbindung geneigt sind.

12. Förderer nach einem der vorhergehenden Ansprüche, **dadurch gekennzeichnet, dass** die innersten oder frontseitigen Endoberflächen (27a, 29a) der rückseitigen äußeren Vertiefungen (27, 29) quer zueinander ausgerichtet sind, und insbesondere zur Frontseite der Verbindung in Richtung der äußeren Seite der Verbindung geneigt sind.

13. Förderer nach einem der Ansprüche 6 bis 12, **dadurch gekennzeichnet, dass** die rückseitigen Vorsprünge (30, 32, 34, 36) eine sanft gebogene Oberfläche aufweisen, die die jeweilige oberseitige Oberfläche (23) und die rückseitige Seite (30a, 32a, 34a, 36a) verbindet.

14. Förderer nach einem der vorhergehenden Ansprüche, **dadurch gekennzeichnet, dass** die Verbindung (12) Abfalldurchgangsmittel (70, 170, 270) umfasst und dadurch, dass die Abfalldurchgangsmittel (70, 170, 270) eine jeweilige Durchgangsöffnung umfassen, deren Form so ausgestaltet ist, dass verhindert wird, dass der Bediener einen Finger in die Öffnung (70, 170, 270) einführt.

15. Förderer nach Anspruch 14, **dadurch gekennzeichnet, dass** eine Lippe (71), die die Abfalldurchgangsöffnung (70, 170, 170) begrenzt, eine längliche Öffnung besitzt, aufweisend eine Mindestbreite oder einen Mindestabstand (70a) und eine maximale Breite oder einen maximalen Abstand (70) zwischen entsprechenden gegenständigen Seiten oder Kanten (71a, 71a; 71b, 71b) der Lippe, wobei die Mindestbreite oder der Mindestabstand (70a) zwischen gegenständigen Seiten oder Kanten (71a, 71a) der Öffnung weniger als die Breite des Fingers des Bedieners (F) beträgt, und die maximale Breite oder der maximale Abstand (70b) zwischen gegenständigen Seiten oder Kanten (71b, 71b) der Öffnung größer ist als die Breite des Fingers des Bedieners (F).

## Revendications

1. Transporteur (10) du type à liaisons articulées (12), comprenant des moyens (11) servant à supporter et à guider une bande transporteuse sans fin (13) ayant un tronçon supérieur d'acheminement de produit et un tronçon inférieur de retour; la bande transporteuse (13) comprenant une pluralité de liaisons articulées interconnectées; chaque liaison (12) comprenant une partie (14) servant à supporter le produit et une partie (16) pour l'articulation aux autres liaisons adjacentes de façon longitudinale du transporteur; la partie (14) servant à supporter le produit possède des bords antérieurs et postérieurs transversaux (23a, 23b) comportant, sur eux, des saillies longitudinales étant des saillies transversalement externes (26, 28; 34, 36) et des saillies transversalement internes (24; 30, 32) qui sont conçues pour être insérées dans des renfoncements prévus à cet effet dans les liaisons adjacentes et qui délimitent latéralement des renfoncements adaptés sur elles, étant, respectivement, des renfoncements transversalement externes (27, 29; 35, 37) et des renfoncements transversalement internes (25; 31, 33) pour recevoir les saillies correspondantes sur les liaisons adjacentes; **caractérisé en ce que** les renfoncements externes (35, 37) sur le bord antérieur (23a) de la liaison ont des faces ou des surfaces d'extrémité transversales respectives les plus éloignées (35a, 37a) situées de façon longitudinale à proximité des, ou devant des faces ou des surfaces d'extrémité respectives les plus rapprochées (31a, 33a) des renfoncements centraux antérieurs (31, 33) et **en ce que** les renfoncements externes postérieurs (27, 29) sur le bord postérieur (23b) de la liaison ont des faces ou des surfaces d'extrémité (27a, 29a) transversales respectives les plus rapprochées étant situées longitudinalement derrière la face externe la plus rapprochée (25a) du renfoncement central (25).

2. Transporteur selon la revendication 1, **caractérisé en ce que** la partie d'articulation (16) de la liaison possède une partie d'engagement antérieure (18) destinée à un goujon (19) qui la relie à la liaison qui la précède et de laquelle se développe une paire d'appendices perpendiculaires (20a, 20b) pour l'engagement et l'articulation d'un goujon (19) qui la relie à la liaison qui la suit, les appendices étant transversalement espacés de manière à recevoir une partie centrale adaptée de la liaison qui suit.

3. Transporteur selon la revendication 2, **caractérisé en ce qu'**il comprend un premier et un second appendice transversal (21a, 21b) se développant à partir de l'appendice perpendiculaire respectif (20a, 20b) et constituant des moyens de retenue dans une direction perpendiculaire à la liaison.

4. Transporteur selon l'une quelconque des revendications précédentes, **caractérisé en ce que** la partie de support de produit (14) comprend une plaque correspondante (22) qui se développe transversalement des deux côtés de la partie d'articulation (16) constituant une surface de support large (23) se développant longitudinalement entre le bord transversal antérieur (23a) et le bord transversal postérieur opposé (23b).

5. Transporteur selon l'une quelconque des revendications précédentes, **caractérisé en ce que** les saillies longitudinales comprennent, sur le bord transversal antérieur (23a), une grande saillie centrale (24) et, sur chaque côté de cette dernière, des saillies externes ou latérales respectives (26, 28) entre lesquelles se trouvent des renfoncements internes antérieurs respectifs (31, 33) et à l'extérieur desquelles se trouvent des renfoncements externes antérieurs (35, 37).

6. Transporteur selon l'une quelconque des revendications précédentes, **caractérisé en ce que** les saillies longitudinales comprennent, sur le bord transversal postérieur (23b), une première et une seconde saillie centrale ou interne (30, 32) et des saillies externes latérales (34, 36) chacune située latéralement par rapport à une saillie centrale respective (30, 32).

7. Transporteur selon l'une quelconque des revendications précédentes, **caractérisé en ce que** les saillies longitudinales (24, 26, 28, 30, 32, 34, 36) possèdent des faces d'extrémité transversales respectives (24a, 26a, 28a, 30a, 32a, 34a, 36a) et des faces latérales opposées (24b, 24c, 26b, 26c, 28b, 28c, 30b, 30c, 32b, 32c, 34b, 34c, 36b, 36c) délimitant latéralement des renfoncements ou des cavités qui se correspondent (31, 33, 35, 37, 25, 27, 29) pour recevoir une saillie longitudinale s'emboîtant sur la liaison adjacente.

8. Transporteur selon l'une quelconque des revendications de 5 à 7, **caractérisé en ce que** sur le bord transversal antérieur (23a), la saillie centrale (24) se développe longitudinalement au-delà des saillies (26, 28) sur chacun de ses côtés.

9. Transporteur selon l'une quelconque des revendications de 6 à 8, **caractérisé en ce que** sur le bord transversal postérieur (23b), les saillies centrales ou internes (30, 32) se développent de manière à ce que leurs faces d'extrémité respectives (30a, 32a) se trouvent substantiellement ou longitudinalement un peu en retrait des faces d'extrémité transversales respectives (34a, 36a) des saillies externes (34, 36) sur chacun de leurs côtés.

10. Transporteur selon l'une quelconque des revendications précédentes, **caractérisé en ce que** les surfaces d'extrémité les plus rapprochées (31a, 33a) des renfoncements centraux antérieurs (31, 33) sont transversalement alignées et coplanaires les unes aux autres.

11. Transporteur selon l'une quelconque des revendications précédentes, **caractérisé en ce que** les surfaces d'extrémité les plus éloignées (35a, 37a) des renfoncements externes antérieurs (35, 37) sont transversalement alignées les unes aux autres, et plus spécifiquement, sont inclinées vers l'arrière de la liaison dans la direction du côté externe de la liaison.

12. Transporteur selon l'une quelconque des revendications précédentes, **caractérisé en ce que** les surfaces d'extrémité les plus rapprochées ou antérieures (27a, 29a) des renfoncements externes postérieurs (27, 29) sont transversalement alignées les unes aux autres, et plus spécifiquement, sont inclinées vers l'avant de la liaison dans la direction du côté externe de la liaison.

13. Transporteur selon l'une quelconque des revendications de 6 à 12, **caractérisé en ce que** les saillies postérieures (30, 32, 34, 36) possèdent une légère surface incurvée reliant la surface supérieure (23) et la face postérieure (30a, 32a, 34a, 36a) respectives.

14. Transporteur selon l'une quelconque des revendications précédentes, **caractérisé en ce que** la liaison (12) comprend des moyens de passage de déchets (70, 170, 270) et **en ce que** les moyens de passage de déchets (70, 170, 270) comprennent un trou de passage dont la forme est telle qu'elle empêche l'opérateur d'insérer un doigt dans le trou (70, 170, 270) lui-même.

15. Transporteur selon la revendication 14, **caractérisé en ce qu'**un rebord (71) délimitant le trou de passage de déchets (70, 170, 170) possède un trou allongé ayant une largeur ou distance minimale (70a) et une largeur ou distance maximale (70b) entre des bords ou des faces correspondants opposés (71a, 71a ; 71b, 71b) du rebord; la largeur ou distance minimale (70a) entre les bords ou faces opposés (71a, 71a) du trou étant inférieure à la largeur du doigt de l'opérateur (F) et la largeur ou distance maximale (70b) entre les bords ou les faces opposés (71b, 71b) du trou étant supérieure à la largeur du doigt de l'opérateur (F).
